# EUROPÄISCHE PATENTSCHRIFT

(11) **EP 0 611 680 B1**
(45) Veröffentlichungstag und Bekanntmachung des Hinweises auf die Patenterteilung: **17.07.1996**
(21) Anmeldenummer: 93120999.3
(22) Anmeldetag: 28.12.1993
(51) Int. Cl.: B60Q 1/52

(54) **Alarmanlage für Fahrzeuge**
Alarm signaling device for vehicles
Dispositif d'alarme pour des véhicules

(30) Priorität: 12.01.1993 DE 4300578
(43) Veröffentlichungstag der Anmeldung: 24.08.1994
(73) Patentinhaber: BECKER GmbH, D-76307 Karlsbad (DE); MERCEDES-BENZ AG, D-70327 Stuttgart (DE)
(72) Erfinder: Heyden, Siegfried, D-75179 Pforzheim (DE); Pfeiffer, Jochen, D-76228 Karlsruhe (DE); Schöne, Heinrich, D-76337 Waldbronn (DE); Kämmler, Alexander, D-71063 Sindelfingen (DE)
(74) Vertreter: Degwert, Hartmut, Dipl.-Phys.

(56) Entgegenhaltungen:
- DE-A- 4 021 146
- US-A- 3 262 096
- US-A- 3 947 815
- US-A- 4 081 788
- US-A- 4 550 304

## Beschreibung

Die Erfindung betrifft eine Alarmanlage für Kraftfahrzeuge, die mit mehreren, insbesondere akustischen und/oder optischen Signalisiereinrichtungen sowie wenigstens einem Schalter zur Auslösung der Alarmanlage ausgestattet sind.

Derartige, dem Oberbegriff des Anspruchs 1 entsprechende und beispielsweise aus der US-A-3 947 815 bekannte Alarmanlagen werden in Taxen und zunehmend auch in anderen Kraftfahrzeugen verwendet, damit ein Fahrzeuginsasse in einer Gefahrensituation, insbesondere bei einem Überfall, andere auf sich aufmerksam machen kann. Dazu betätigt er einen unauffällig angebrachten Schalter, wodurch bestimmte Signalisiereinrichtungen wie das Horn und die Scheinwerfer in Betrieb gesetzt werden beziehungsweise, falls vorhanden, das Taxi-Dachzeichen anfängt zu blinken.

Da die Alarmanlage unauffällig und rasch auslösbar sein muß, sind die aktivierten Signalisiereinrichtungen von vornherein festgelegt. Daher hat der Fahrzeuginsasse keine Möglichkeit, Art oder Umfang der abgegebenen Alarmsignale der besonderen Gefahrensituation anzupassen.

Der Erfindung liegt die Aufgabe zugrunde, eine Alarmanlage für Kraftfahrzeuge (KFZ) dahingehend weiterzuentwickeln, daß ein angegriffener Fahrzeuginsasse mit einfachen Mitteln situationsgerecht Alarm geben kann.

Diese Aufgabe wird bei einer Alarmanlage der eingangs angegebenen Art erfindungsgemäß dadurch gelöst, daß die Signalisiereinrichtungen in zwei Gruppen eingeteilt sind, daß beide Gruppen von Signalisiereinrichtungen an ein zentrales Steuergerät angeschlossen sind, das einen mit dem Schalter verbundenen Auslöseeingang aufweist, und daß durch einmalige Betätigung des Schalters die erste der beiden Gruppen sowie durch erneute Betätigung des Schalters die zweite Gruppe von Signalisiereinrichtungen aktivierbar ist. Eine solche Alarmanlage ist besonders einfach zu bedienen und ihre Bedienung leicht verständlich, so daß sie ein hohes Sicherheitspotential aufweist. Die Zuordnung der Signalisiereinrichtungen zu den beiden Gruppen ergibt sich aus dem besonderen Einsatzzweck der Alarmanlage. Häufig ist es zweckmäßig, wenn die erste Gruppe nur solche Signalisiereinrichtungen enthält, deren Aktivierung durch einen Insassen im Inneren des Fahrzeugs nicht wahrnehmbar ist, beispielsweise die Notruf-Einrichtung eines Funkgeräts oder ein blinkendes Dachzeichen bei Taxis. Eine einmalige Betätigung des Schalters löst einen sogenannten stillen Alarm aus, durch den der Täter nicht provoziert wird. Bei einer unmittelbar abzuwendenden Bedrohung von Leib und Leben kann der Fahrzeuginsasse dann weitere, insbesondere in der Umgebung des Fahrzeugs deutlich wirkende Notsignale abgeben, etwa über die Hupe oder die Fahrzeugbeleuchtung.

Wenn die Zugehörigkeit der Signalisiereinrichtungen zu den beiden Gruppen durch Konfiguration des zentralen Steuergeräts bestimmbar ist, senkt dies die Kosten, da ein und dasselbe Steuergerät für viele Funktionen und Einsatzzwecke verwendbar ist. Die Konfiguration des Steuergeräts kann zumindest teilweise durch benutzerzugängliche Einstellelemente einstellbar sein, nämlich soweit es dem Anwender freisteht, die Funktion der Alarmanlage zu beeinflussen. Um gesetzliche Vorschriften für KFZ-Alarmanlagen zu erfüllen und gleichzeitig deren Umgehung zu verhindern, ist es zweckmäßig, wenn die Konfiguration des Steuergeräts zumindest teilweise durch Platinenbestückung einstellbar ist. In diesem Fall läßt sich außerdem die Fertigung schnell und einfach auf verschiedene, länderspezifischen Vorschriften genügende Typen der Alarmanlage umstellen.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 die Einteilung mehrerer Signalisiereinrichtungen in zwei Gruppen;
Fig. 2 den Funktionsablauf einer Ausführungsform für Taxen;
Fig. 3 den Funktionsablauf einer Ausführungsform für andere Kraftfahrzeuge;
   und
Fig. 4 ein Blockschaltbild des Steuergeräts.

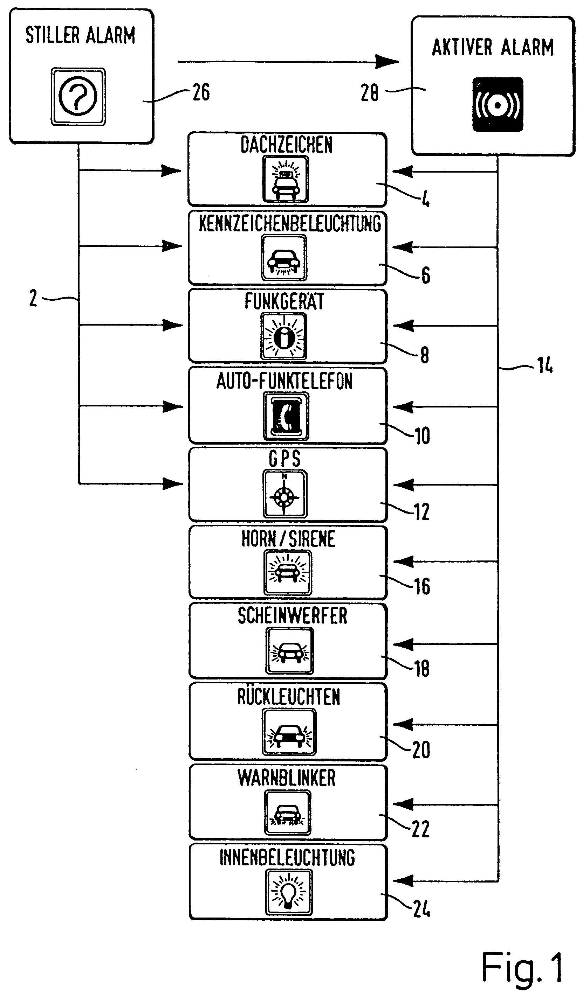

In Fig. 1 umfaßt eine erste Gruppe 2 von Signalisiereinrichtungen ein Dachzeichen 4, eine Kennzeichenbeleuchtung 6, ein Funkgerät 8, ein Auto-Funktelefon 10 und ein sogenanntes Global Position System, kurz GPS 12. Eine zweite Gruppe 14 von Signalisiereinrichtungen umfaßt außer den genannten ein Horn oder eine Sirene 16, Scheinwerfer 18, Rückleuchten 20, Warnblinker 22 und eine Innenbeleuchtung 24 des Fahrzeugs.

Nach ihrer Aktivierung arbeiten die Signalisiereinrichtungen im einzelnen wie folgt: Soweit die Alarmanlage in einem Taxi eingebaut ist, blinkt das "TAXI"-Leuchtschild, das Dachzeichen 4. Die Kennzeichenbeleuchtung 6 leuchtet fortlaufend. Das Funkgerät 8 sendet alle im Fahrzeuginneren aufgenommenen Geräusche an die Taxi-Zentrale oder auf einem speziellen Notruf-Kanal beispielsweise an die Polizei. Das Auto-Funktelefon 10 gibt selbsttätig einen Notruf ab. Wenn dabei automatisch die Freisprecheinrichtung des Telefons eingeschaltet wird, kann die Notruf-Stelle mithören. Das GPS 12 ist ein Fahrzeuginformations- und Fahrzeugnavigations-System, wie es für Kraftfahrzeuge geplant ist, und überträgt die Kennung und den Standort des Fahrzeugs über das Funkgerät 8 bzw. über ein Satelliten-Kommunikationsystem an eine geeignete Stelle oder Einrichtung. Das Horn oder die Sirene 16 ertönt, und die Scheinwerfer 18, die Rückleuchten 20 und die Warnblinker 22 fangen an zu blinken, während die Innenbeleuchtung 24 das Fahrzeuginnere beleuchtet.

Eine Aktivierung der Signalisiereinrichtungen der ersten Gruppe 2 bei einem Überfall wird als stiller Alarm 26 bezeichnet, da sie vom Fahrzeuginneren aus nicht wahrnehmbar sind. Die Abgabe des stillen Alarms 26 ist sinnvoll, wenn sich der Täter nicht in die Enge getrieben fühlen soll. Außerdem hat sich der Nutzen lediglich optischer und akustischer Signalisiereinrichtungen als fragwürdig erwiesen, da sie falsch verstanden werden können und Außenstehende sich, begünstigt durch ihre Anonymität, oft vor Hilfsmaßnahmen scheuen. Die Alarmsignale des Funkgeräts 8, des Auto-Funktelefons 10 und des GPS 12 sind dagegen eindeutig und lassen sich an geeignete Stellen richten. Sie werden auch als globale Alarmsignale bezeichnet, da sie weit über den visuell oder akustisch zugänglichen Umgebungsbereich des Fahrzeugs hinausreichen.

Die Signalisiereinrichtungen der zweiten Gruppe 14, die vorzugsweise sämtliche vorhandenen und geeigneten Signalisiereinrichtungen des Fahrzeugs umfaßt, werden bei einer unmittelbaren Gefahr für Leib und Leben des Opfers aktiviert, was als aktiver Alarm 28 bezeichnet wird. Der aktive Alarm 28 kann ferner ausgelöst werden, wenn es keiner Rücksichtnahme auf den Täter bedarf, da dieser den Tatort verlassen hat.

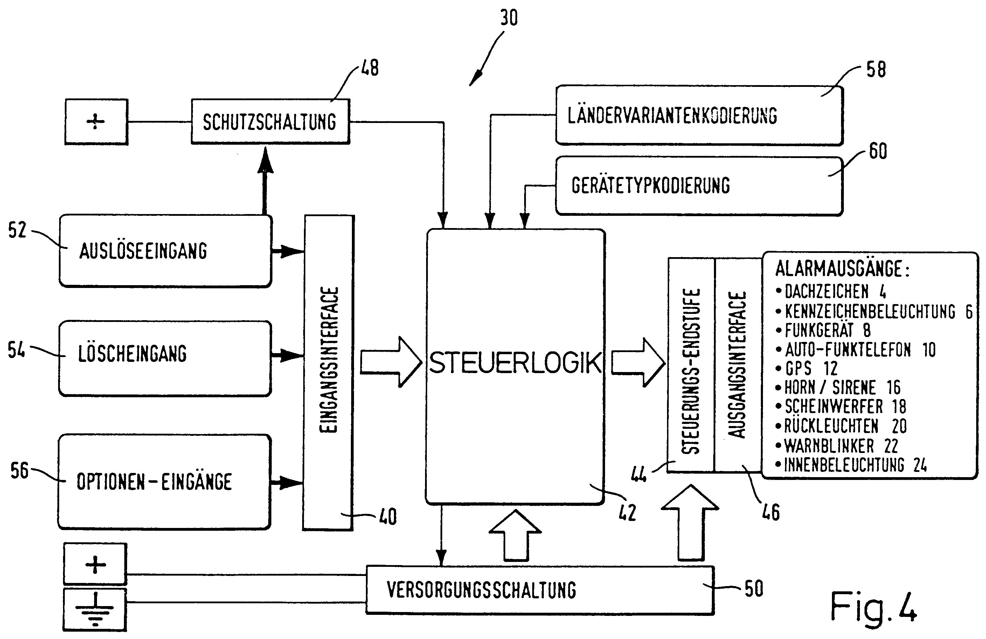

Sämtliche Signalisiereinrichtungen sind an ein zentrales Steuergerät 30 (Fig. 4) angeschlossen, das sowohl die Wahl der Gruppe 2 oder 14 als auch den zeitlichen Ablauf der einzelnen Warnfunktionen steuert. Die Einzelheiten des Steuergeräts 30 werden später anhand von Fig. 4 näher erläutert.

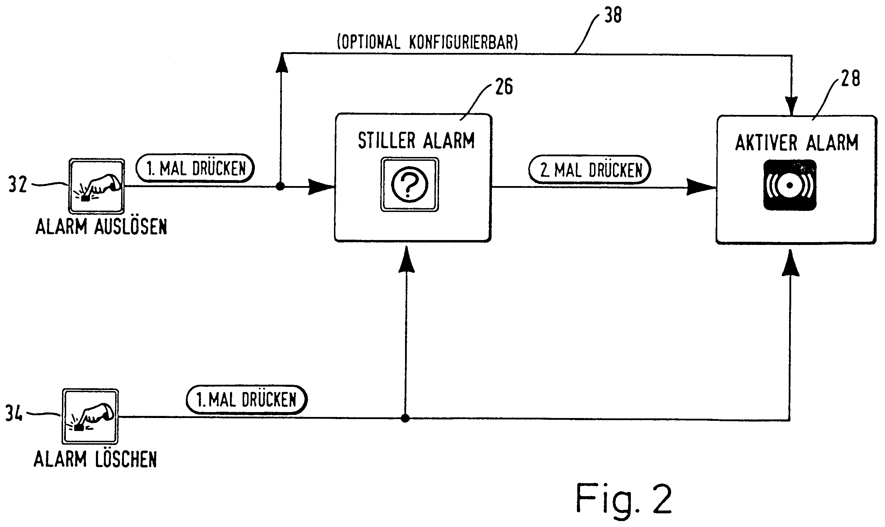

Zur manuellen Auslösung der Alarmanlage dient ein an das Steuergerät 30 angeschlossener Schalter 32 (Fig. 2), der beispielsweise ein versteckt am Armaturenbrett angebrachter Taster ist. Weitere Schalter, etwa ein im Kofferraum angebrachter Schalter, können zu dem Schalter 32 parallel geschaltet sein.

Bei einer einmaligen Betätigung des Schalters 32 aktiviert das Steuergerät 30 die Signalisiereinrichtungen 4, 6, 8, 10 und 12 der ersten Gruppe 2; es wird stiller Alarm 26 ausgelöst, wie in Fig. 2 veranschaulicht. Bei einer erneuten Betätigung des Schalters 32 aktiviert das Steuergerät 30 außer den genannten auch noch die Signalisiereinrichtungen 16, 18, 20, 22 und 24 der zweiten Gruppe 14; es wird aktiver Alarm 28 ausgelöst. Da beide Alarmstufen 26 und 28 durch ein und denselben Schalter 32 ausgelöst werden, ist die Bedienung praktisch ebenso einfach wie bei bekannten Alarmanlagen. Außerdem besteht eine hohe Sicherheit gegen Fehlbedienungen. Ferner bedarf es keiner komplizierten Überlegungen, um einen der konkreten Gefahrensituation angepaßten Alarm auszulösen.

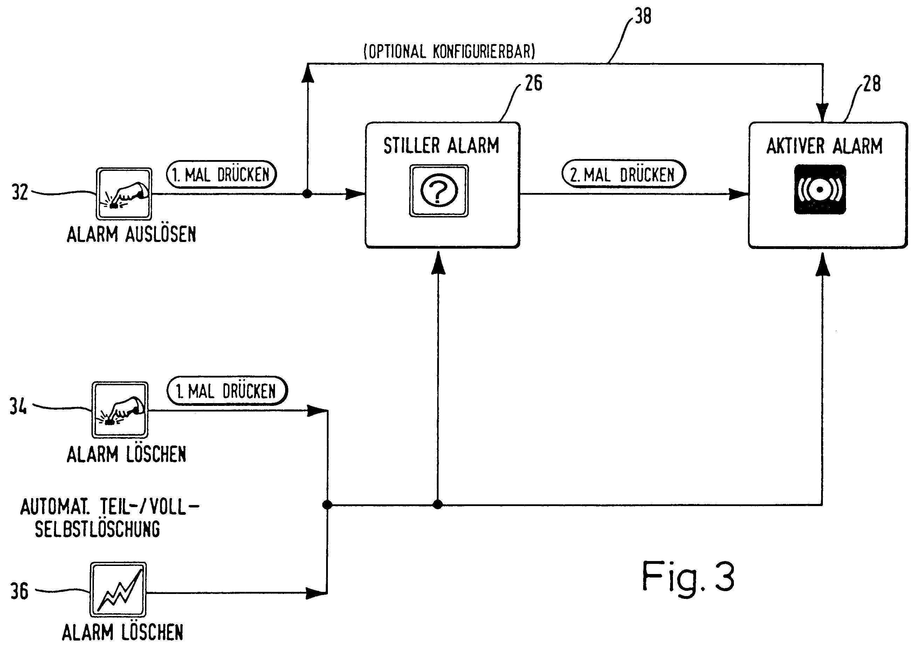

Der Alarm kann in jeder Stufe durch einen weiteren Schalter 34 gelöscht werden. Für andere Fahrzeuge als Taxen, bei denen zunehmend ebenfalls Maßnahmen zur Alarmgabe gewünscht werden, ist durch Gesetz oft vorgeschrieben, daß sich eine eingebaute Alarmanlage nach einer gewissen Zeit selbsttätig zum Teil oder vollständig abschaltet. Diesen Vorgang steuert eine parallel zu dem Schalter 34 wirkende Selbstlösch-Vorrichtung 36, wie sie in Fig. 3 eingezeichnet ist. Im übrigen stimmen die Fig. 2 und 3 überein.

Falls es die Umstände erfordern, kann die Funktion des stillen Alarms 26 überbrückt werden, so daß bereits bei einmaliger Betätigung des Schalters 32 aktiver Alarm 28 ausgelöst wird, wie durch eine Linie 38 in Fig. 2 und 3 veranschaulicht.

In Fig. 4 ist der innere Aufbau und die äußere Beschaltung des Steuergeräts 30 näher dargestellt. Das Steuergerät 30 umfaßt ein Eingangsinterface 40, eine Steuerlogik 42, eine Steuerungs-Endstufe 44 und ein Ausgangsinterface 46.

Die Stromversorgung von der Fahrzeugbatterie erfolgt teils über eine Schutzschaltung 48, die auf eine Betätigung des Schalters 32 anspricht, teils über eine auf die Steuerlogik 42 ansprechende Versorgungsschaltung 50. Auf diese Weise läßt sich ein sehr niedriger Ruhestromverbrauch erreichen.

Das Eingangsinterface 40 weist einen Auslöseeingang 52 auf, der mit dem Schalter 32 verbunden ist, und einen Löscheingang 54, der mit dem Schalter 34 verbunden ist. Der Schalter 32 zur Auslösung und der Schalter 34 zur Löschung der Alarmanlage sind Tastschalter, die bei ihrer Betätigung impulsförmige Signale über das Eingangsinterface 40 an die Steuerlogik 42 abgeben. Das Eingangsinterface 40 weist ferner Optionen-Eingänge 56 auf, über welche die Zugehörigkeit der Signalisiereinrichtungen zu den beiden Gruppen 2, 14 nach Belieben des Anwenders konfigurierbar sind. Beispielsweise ist es möglich, das Horn 16 und/oder die Scheinwerfer 18 vom Alarm auszunehmen. Auch die Konfiguration gemäß der Linie 38 in Fig. 2, 3 erfolgt an dieser Stelle. Bei einer Ausführungsform, die über eine einzige Mehrfach-Steckverbindung an das Fahrzeugnetz angeschlossen wird, sind einfache Kabelbrücken zur Konfiguration der Optionen-Eingänge 56 vorgesehen.

Die Steuerlogik 42 verarbeitet die eingehenden Signale, um die anzusteuernden Signalisiereinrichtungen auszuwählen, und erzeugt die zu ihrem Betrieb erforderlichen Steuersignale. Die Signalisiereinrichtungen sind am Ausgangsinterface 46 anschließbar, das über die Steuerungs-Endstufe 44 von der Steuerlogik 42 angesteuert wird. Als ansprechbare Signalisiereinrichtungen sind das Dachzeichen 4, die Kennzeichenbeleuchtung 6, das Funkgerät 8, das Auto-Funktelefon 10, das GPS 12, das Horn oder die Sirene 16, die Scheinwerfer 18, die Rückleuchten 20, die Warnblinker 22 und die Innenbeleuchtung 24 des Fahrzeugs vorgesehen.

Die Auswahl der Gruppe 2 oder 14 von Signalisiereinrichtungen erfolgt anhand der vom Schalter 32 abgegebenen Signale, wie in Verbindung mit Fig. 2 beschrieben. Außerdem sind in den meisten Fällen länderspezifische Vorschriften für die Arbeitsweise von KFZ-Alarmanlagen zu berücksichtigen. So gibt es spezielle Normen für die USA und für die Schweiz und die ECE-Norm für die meisten europäischen Staaten. Diese Normen schreiben die Arbeitsweise der einzelnen Signaleinrichtungen vor, insbesondere bei intermittierend arbeitenden Signaleinrichtungen Pulsfrequenz, Pulsdauer und Pulsfolge, und gegebenenfalls Umfang und Zeitpunkt einer Selbstlöschung gemäß Fig. 3. Die Konfiguration der Steuerlogik 42 hinsichtlich dieser Vorschriften erfolgt mittels einer Ländervariantenkodierung 58, die durch die Bestückung der entsprechend variabel ausgelegten Platine der Alarmanlage eingestellt wird. In gleicher Weise ist durch eine Gerätetypkodierung 60 festgelegt, ob die Alarmanlage für Taxis oder für andere, zivile Fahrzeuge wie VIP-Fahrzeuge oder Werttransporter bestimmt ist. Durch Konfiguration eines einzigen Basisgeräts läßt sich also eine Vielzahl von Sondertypen der Alarmanlage herstellen.

Im Hinblick auf künftige KFZ-Bussysteme erweist sich der modulare Aufbau des Steuergeräts 30 als vorteilhaft, da es in einfacher Weise mit den übrigen Komponenten der Alarmanlage vernetzt werden kann.

Die beschriebene Alarmanlage läßt sich jederzeit an bekannte Alarmanlagen gegen Fahrzeug-Aufbruch anschließen oder darin integrieren. Wenn der Anschluß in der Weise erfolgt, daß bei einem Diebstahlversuch nur der stille Alarm 26 ausgelöst wird, läßt sich die Chance zur Ergreifung des Täters erhöhen.

## Patentansprüche

1. Alarmanlage für Kraftfahrzeuge, die mit mehreren, insbesondere akustischen und/oder optischen Signalisiereinrichtungen sowie wenigstens einem Schalter (32) zur Auslösung der Alarmanlage ausgestattet sind, dadurch gekennzeichnet, daß die Signalisiereinrichtungen in zwei Gruppen (2,14) eingeteilt sind, daß beide Gruppen von Signalisiereinrichtungen an ein zentrales Steuergerät (30) angeschlossen sind, das einen mit dem Schalter verbundenen Auslöseeingang (52) aufweist, und daß durch einmalige Betätigung des Schalters die erste (2) der beiden Gruppen sowie durch erneute Betätigung des Schalters die zweite (14) Gruppe von Signalisiereinrichtungen über das Steuergerät aktivierbar ist.

2. Alarmanlage nach Anspruch 1, dadurch gekennzeichnet, daß die erste Gruppe (2) nur solche Signalisiereinrichtungen (4, 6, 8, 10, 12) enthält, deren Aktivierung durch einen Insassen im Inneren des Fahrzeugs nicht wahrnehmbar ist.

3. Alarmanlage nach Anspruch 1 oder 2, dadurch gekennzeichnet, daß die Zugehörigkeit der Signalisiereinrichtungen zu den beiden Gruppen (2, 14) durch Konfiguration des zentralen Steuergeräts (30) bestimmbar ist.

4. Alarmanlage nach Anspruch 3, dadurch gekennzeichnet, daß die Konfiguration des Steuergeräts (30) zumindest teilweise durch benutzerzugängliche Einstellemente einstellbar ist.

5. Alarmanlage nach Anspruch 3, dadurch gekennzeichnet, daß die Konfiguration des Steuergeräts (30) zumindest teilweise durch Platinenbestückung einstellbar ist.

## Claims

1. An alarm system for motor vehicles, comprising a plurality of, especially acoustical and/or optical, signalling means and at least one switch (32) for triggering the alarm system, characterized in that the signalling means are divided into two groups (2, 14), that both groups of signalling groups are connected to a central control apparatus (30) which has a trigger output (52) connected with the switch, and that the first (2) of the two groups can be activated by a single actuation of the switch and the second (14) group of signalling means can be activated via the control apparatus actuating the switch anew.

2. Alarm system according to claim 1, characterized in that the first group (2) contains those signalling means (4, 6, 8, 10, 12) the activation of which cannot be recognized by an occupant within a vehicle.

3. Alarm system according to claim 1 or 2, characterized in that association of the signalling means with both groups (2, 14) can be determined by configuration of the central control apparatus (30).

4. Alarm system according to claim 3, characterized in that the configuration of the control apparatus (30) can be adjusted at least partially by means of adjustment elements accessible by the user.

5. Alarm system according to claim 3, characterized in that the configuration of the control apparatus (30) can be at least partially adjusted by circuitry on a circuit board.

## Revendications

1. Système d'alarme pour des automobiles, comprenant une pluralité de moyens de signalisation acoustique et/ou optique en particulier, ainsi qu'au moins un commutateur (32) pour déclencher le système d'alarme, caractérisé en ce que les moyens de signalisation sont divisés en deux groupes (2, 14), en ce que les deux groupes de moyens de signalisation sont reliés à un appareil central de commande (30) qui présente une sortie (52) de déclenchement relié au commutateur, et en ce que le premier (2) des deux groupes peut être activé, par l'intermédiaire de l'appareil de commande, par un seul actionnement du commutateur et le second (14) groupe de moyens de signalisation par actionnement répété.

2. Système d'alarme selon la revendication 1, caractérisé en ce que le premier groupe (2) contient seulement des moyens de signalisation (4, 6,6 8, 10) dont l'activation ne peut pas être perçue par un occupant du véhicule.

3. Système d'alarme selon la revendication 1 ou 2, caractérisé en ce que l'association des moyens de signalisation aux deux groupes (2, 14) peut être déterminée par configuration de l'appareil central de commande 830).

4. Système d'alarme selon la revendication 3, caractérisé en ce que la configuration de l'appareil de commande (30) peut être au moins partiellement ajustée par l'intermédiaire d'éléments d'ajustage accessibles à l'utilisateur.

5. Système d'alarme selon la revendication 3, caractérisé en ce que la configuration de l'appareil de commande (30) peut être au moins partiellement ajustée sur carte de circuit imprimé.
